# EUROPEAN PATENT APPLICATION

(11) **EP 2 141 123 A2**
(43) Date of publication of application: **06.01.2010**
(21) Application number: 09164089.6
(22) Date of filing: 30.06.2009
(51) Int. Cl.: C01C 1/10, D06B 9/06

(54) **Process for recovering liquid ammonia from a textile fabric treated with liquid ammonia or with liquid ammonia solutions.**

(30) Priority: 01.07.2008 IT VI20080161
(71) Applicant: Franchetti, Roberto, 36100 Vicenza (IT)
(72) Inventor: Franchetti, Roberto, 36100 Vicenza (IT)
(74) Representative: Bettello, Pietro

(57) **Abstract**

This is a process for the recovery of ammonia from a fabric treated with liquid ammonia or with a liquid ammonia solution. This process is **characterised in that** it envisages the following steps:
a) evaporation or washing of ammonia from the fabric, inside a process machine (A);
b) fixing and concentration of ammonia, in the form of ammonium hydroxide, inside a scrubber (B);
c) partial evaporation, by heating, of an adjustable percentage of ammonia, starting from the concentrated solution of ammonium hydroxide, inside an evaporator (C);
d) complete transformation of the evaporated ammonia to liquid form, inside a liquefier (D);
e) cooling of the ammonium hydroxide solution depleted in ammonia, which is then sent back into scrubber (B), to be enriched again with ammonia.

## Description

The present invention concerns a process for recovering liquid ammonia from a textile fabric treated with liquid ammonia or with liquid ammonia solutions.

Many fabric finishing processes are known, whose purpose is to improve the typical properties of fabrics. Among all of these finishing treatments, one of the most commonly applied and studied envisages the use of liquid ammonia baths. In this process, the fabric, and in particular cotton, flax, viscose or wool, is impregnated with liquid ammonia for a time varying from 1 to 30 seconds at the liquefaction temperature of ammonia. Usually, during this reaction step the fabric is subjected to longitudinal and/or transverse stresses.

Liquid ammonia treatment can give a textile product remarkable advantages, among which we can mention improved dye affinity, improved dimensional stability upon washing, improved wash and wear characteristics, a soft, full and silky touch, prolonged maintenance of the "new aspect", even after several washes and, finally, higher resistance to abrasion and tear.

However, all of these effects depend also on the method used for the complete removal of ammonia from the cellulosic fabric after the reaction phase.

The first method used envisages evaporation of the ammonia by passing the fabric over heated rollers; in particular, this method is used for vegetable-based fabric and can result in a soft, elastic and silky touch. Conversely, it determines a low yield in the subsequent dyeing process, if any. The machine used to perform this process is quite simple in terms of mechanics; conversely, the plant used for the recovery and liquefaction of the evaporated ammonia is extremely complicated and costly, besides being very difficult to manage and involving very high energy costs. As an example of the current state of the art, the following documents are cited: U.S.-A-3.721.097 and U.S.-A-4.074.969.

According to an alternative process, the removal of ammonia from the textile product is obtained by immersing the said textile in a water bath; this gives a considerable advantage in terms of increased dyeing yield, with up to 50% savings on dye costs. This is due to the fact that the removal of ammonia by means of water results in a markedly-oriented crystalline crosslinking of the cellulose fibres. As an example of the current state of the art, the following document is cited: BE 1.009.874 A5.

According to the latter document, the ammonia gasses that build up inside the machine in which the process is carried out are collected and fixed in a so-called "scrubber", in the form of ammonium hydroxide, so as to be stored in a suitable storage tank, together with the ammonia solution for washing the fabric. The ammonia fraction will then be separated from water by distillation, performed inside a tower, at an operating pressure of about 12/15 atmospheres. The tower has horizontal sieve plates fitted at regular intervals, provided with suitable passageways to permit fluid flow therethrough, and with bubble caps on their top; alternatively, there are sections fitted with filling bodies.

The temperature is higher at the bottom of the tower, so as to permit complete evaporation of the ammonia, together with a high percentage of water; this temperature is bound to decrease as you move up the tower. In fact, temperature decreases with each successive plate, thereby resulting in a new ammonia/water equilibrium, both in the liquid and in the gaseous phase. In correspondence with the last plate, ammonia will be substantially pure, so as to permit liquefaction of the gaseous fraction in the next condenser.

In order for the plates, especially the top ones, to be always damp, in order to wash and cool the ammonia gasses, as well as to ensure that the ammonia obtained is pure and to avoid having to use too many plates, a high reflux of condensed ammonia is needed inside the tower, which causes high energy use.

Besides involving high energy use, this plant is also very costly, as well as very difficult to manage. It also requires a long cycle start up time, before the distillation column is ready for use. Finally, due to the large volume of liquid ammonia flowing therethrough, this plant poses significant safety problems and, consequently, special permits are required to operate it. The industrial application of all of these processes for the treatment of fabrics with liquid ammonia has always had to face problems linked to ammonia recovery and regeneration. This is the reason why these processes, although well known, are not widely used, since, as we have seen before, there are remarkable limitations to their practical implementation.

The purpose of this invention is to provide a process for separating the gaseous ammonia, and subsequently liquefying it, contained in an ammonia aqueous solution coming from a textile treatment. In particular, this invention must be capable of treating liquid ammonia, as well as liquid ammonia in conjunction with caustic soda, and liquid ammonia in conjunction with finishing products and, finally, liquid ammonia in conjunction with dyestuffs.

This is achieved through a process according to the characterising part of Claim 1.

The plant relevant to the process referred to in this invention is suitable for continuous, semi-continuous and discontinuous treatment of fabrics.

This invention will now be described and illustrated in detail, with reference to certain specific embodiments thereof, which are provided purely by way of non-limiting example, with the help of the enclosed figures, where:
- Fig. 1 (table I) is a diagram of the first embodiment of the process of the invention;
- Fig. 2 (table II) is a diagram of an alternative implementation of the above process;
- Fig. 3 (table III) shows a double table with the ammonia-water equilibrium data (as collected by a process simulation software at two different pressure values);

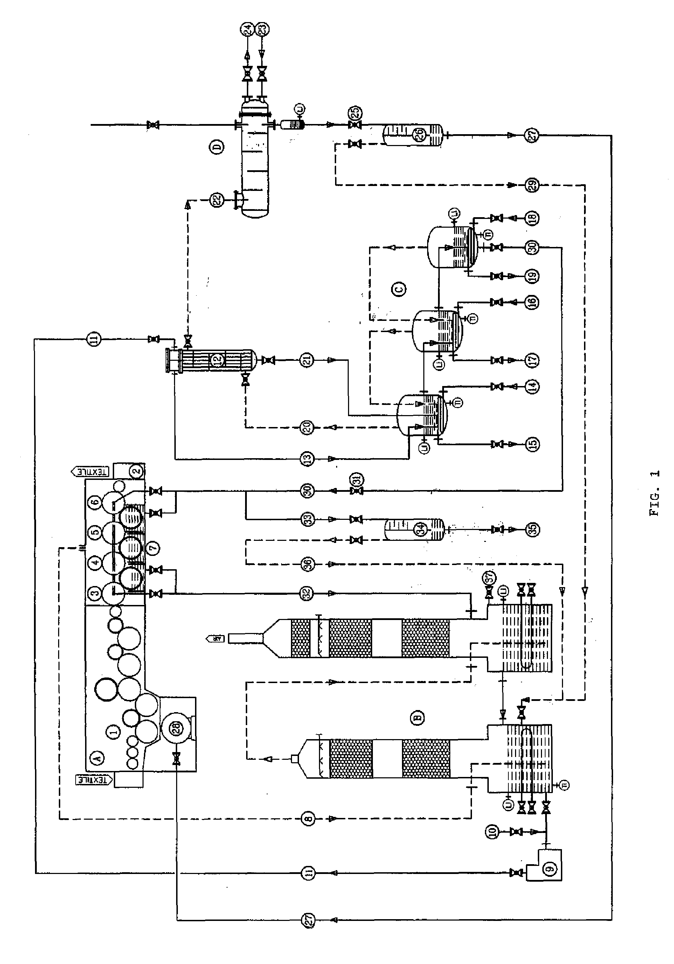

Figure 1 is a schematic diagram of the plant for ammonia treatment of fabrics, complete with ammonia recovery and liquefaction diagram, according to the first preferred embodiment of this invention.

In particular, the textile product is treated with liquid ammonia or with an ammonia solution in machine A.

In this connection, by the latter term we mean liquid ammonia with water and/or with chemical finishing products and/or with ammonia salts and/or with dyestuffs and/or with caustic soda.

As said before, machine A can work on a continuous, semi-continuous or discontinuous basis. Moreover, this machine can be operated at atmospheric pressure, or at higher pressure. It should be noted that these preliminary considerations are applicable also to the other embodiments of the process according to this invention.

Inside machine A operating on a continuous basis, the fabric is impregnated in zone 1, either with liquid ammonia NH₃, or with an ammonia solution, which is then removed from the fabric by evaporation in zone 2, either by contact with heated cylinders 3, 4, 5, 6, or by contact with the heated cylinders and by washing with water in the small tubs 7 placed underneath.

The NH₃ fumes, or NH₃ fumes plus water vapours, are collected on top of machine A and conveyed through line 8 into scrubber B, to be fixed and concentrated in the form of ammonium hydroxide (NH₄OH).

The concentration of the NH₃ fraction inside the NH₄OH solution depends on the temperature of the solution, according to the NH₃/H₂O equilibrium tables. For instance, at atmospheric pressure and at -10°C temperature the NH₃ fraction can reach 55%; at 0° temperature the NH₃ fraction can reach 44%; at +10° C temperature the NH₃ fraction can reach 39.6% and at +20° C temperature, the NH₃ fraction can reach 34.3%.

By adjusting the temperature of the NH₄ OH solution in scrubber B, it is possible to adjust the percentage of NH₃ present therein; temperature can be regulated at the inlet of NH₃ gasses coming from the plant, either by a cooling system, or by circulating the ammonia solution through a number of cylinders installed inside machine A; in this way, the cold liquid ammonia, which is present in a high percentage on the fabric, in direct contact with the outer surface of the cylinders, will indirectly be able to cool the flow of ammonia solution circulating therethrough.

According to this invention, the cold concentrated NH₄0H solution will then be fed into evaporator C by a pump 9 that, advantageously, has an adjustable discharge head and flow rate; before entering evaporator C, the solution will be passed through pipe 11, through condenser 12 and then also through pipe 13. Makeup ammonium hydroxide (consumption) will be fed into the circuit by 10.

Figure 1 illustrates three evaporators "C" connected in series, yet with independent temperature control and independent heating/cooling systems 14/15, 16/17 and 18/19.

Inside evaporator C, the concentrated NH₄OH solution is fed either on a continuous basis, or at given time intervals. Evaporation of a high percentage of NH₃ gas takes place according to the NH₃/H₂O equilibrium tables.

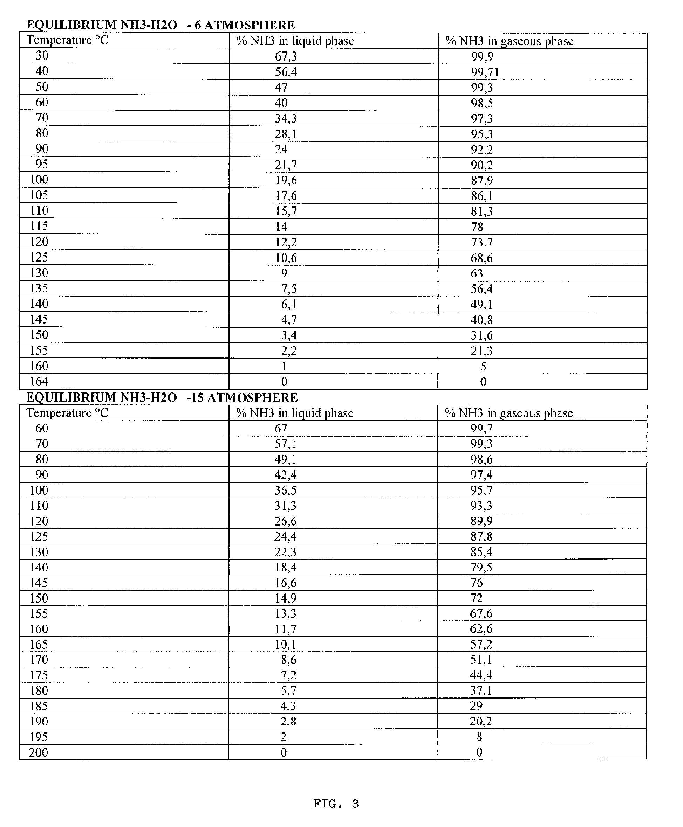

In the NH₃/H₂O equilibrium tables of fig. 3, given by way of example, it can be observed that in the % NH₃ vapour of an NH₄OH solution containing more than 10% NH₃, the percentage of H₂O present is small; on the contrary, the percentage of H₂O present in the % NH₃ vapour of an NH₄OH solution containing less than 10% NH₃ is extremely high.

Complete separation of the NH₃ fraction from the ammonia solution can only be achieved at the solution boiling point; however, this generates a very high percentage of aqueous vapours, which will then have to be cooled and washed by means of a high reflux of previously condensed, liquid NH₃, resulting in very high energy use.

### Example: 15 atmosphere operating pressure.

Feeding of an NH₄OH solution containing 30 % NH₃; temperature of the incoming solution: 20° C.
First evaporator C:
   - The temperature of the NH₄OH solution is kept at 100° by circuit 14/15. Under these temperature and pressure conditions, the NH₃ percentage in the solution is 36.5%, while the evaporated fraction of NH₃ is 95.7 per cent pure (4.3% water); the NH₄OH solution is then passed into the second evaporator C.
Second evaporator C:
   - The temperature of the NH₄OH solution is kept at 125° by circuit 16/17. Under these temperature and pressure conditions, the NH₃ percentage in the solution drops to 24.4%, while the evaporated fraction of NH₃ is 87.8 per cent pure (12.2% water). The NH₃ fumes plus water vapours are bubbled and cooled to 100° C, through a pipe, into the solution present in the first evaporator C. The solution depleted in NH₃ is then passed into the third evaporator C.
Third evaporator C:
   The temperature of the NH₄OH solution is kept at 150° C by circuit 18/19. Under these temperature and pressure conditions, the NH₃ percentage in the solution drops to 14.9%, while the evaporated fraction of NH₃ is 72 per cent pure (28% water). The NH₃ fumes plus water vapours are bubbled and cooled to 125°C, through a pipe, into the solution present in the second evaporator C. The solution with 14.9 per cent NH₃, at 150°C temperature, is then discharged through line 30.

Evaporation in three successive steps guarantees removal of approximately 50% of the ammonia (NH₃) present in the incoming NH₄OH solution, while the NH₃ fumes collected in the head of the first evaporator C contain approx. 5 % water. These fumes are then passed, via 20, into condenser 12, to be indirectly cooled either by the incoming cold NH₄OH solution, or by another liquid, allowing condensation of the water fraction which, once changed into NH₄OH, is discharged, through line 21, into evaporator C. The NH₃ fumes, substantially pure according to the NH₃/H₂O equilibrium, are then passed, via 22, into liquefier D, to be changed into liquid ammonia.

This recovery system ensures an adjustable hourly production rate, for instance from 50 to 500 kg liquid ammonia, by adjusting the flow of incoming NH₄OH into C and the subsequent percentage of evaporated NH₃, followed by condensation.

Thus, the amount of NH₃ evaporated from machine A, which varies depending on operation speed and fabric type, can be changed into liquid form by the recovery system, prior to being reused in the fabric finishing process, still in machine A.

In this way, the fabric treatment machine A and the recovery system B, C, D, can work in parallel, which would be impossible to achieve with a little flexible distillation column. The amount of liquid ammonia present in the circuit - machine A plus recovery plant - is always low.

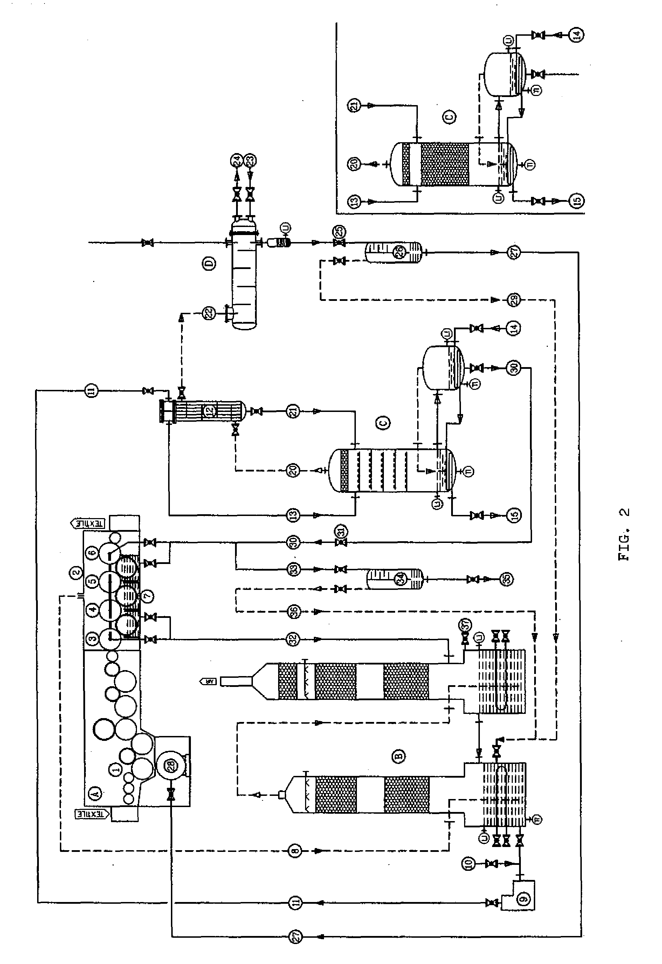

Figure 2 illustrates a variation of evaporator C, wherein evaporation of the NH3 fraction is always controlled by heating circuit 14/15.

On top of the evaporation zone there is a mini column with filling bodies, or there are plates similar to those fitted in the distillation tower, which ensure high physical and thermal exchange between the downflowing NH40H solution and upflowing hot vapours; the exchange between the downflowing NH40H solution and the upflowing hot NH3 fumes plus water vapours has a twofold function, namely: it condensates the water fraction present in the fumes and pre-heats the incoming solution. The NH3 gasses, containing a small percentage of water according to the NH3/H2O equilibrium tables, leaving evaporator C are passed, via 20, into condenser 12, to be indirectly cooled either by the incoming cold NH₄OH solution or by another liquid; here, the water present will be condensed and changed into NH₄OH prior to being sent back again, via 21, into evaporator C. The NH₃ fumes, substantially pure according to the NH₃/H₂O equilibrium tables, are passed, via 22, into liquefier D.

### Example: 6 atmosphere operating pressure.

Feeding of an NH₄OH solution containing 30 per cent NH₃; temperature of the incoming solution: 20° C.

The temperature of the NH₄OH solution is kept constant at 130° C (in the evaporation zone) by means of heating circuit 14/15. Under these temperature and pressure conditions, the NH₃ percentage drops to 9% while the evaporated fraction of NH₃ is 63 per cent pure (37% water); after thermal exchange with the incoming NH₄OH solution, the temperature of NH₃ gasses leaving evaporator C is approx. 80° C; the water content in the NH₃ gas is about 5%, according to the NH₃/H₂O equilibrium table.

On leaving condenser 12, substantially pure NH₃ gasses are passed, via 22, into D.

The depleted solution, containing approx. 9 % NH₃, at 130° C temperature, is then discharged from the bottom of the evaporator through line 30.

The two examples of partial evaporation of ammonia (NH₃) from an NH₄OH solution are non-limiting examples of the process; several parameters may be changed, such as operating pressure, evaporation temperature, percentage of NH₃ in the incoming solution, percentage of NH₃ in the depleted outgoing solution; in case of reduced NH₃ evaporation or of in case of reflux of liquid NH₃, condenser 12 may become superfluous.

In order to ensure a high yield of the system, the percentage of water, mixed with NH₃ fumes, that leaves evaporator C, has to be kept low.

The NH₄OH solution depleted in NH₃, yet loaded with thermal energy, will then be discharged from the bottom of evaporator C and will be passed, via line 30, into cylinders 6, 5, 4, 3, which are interconnected by means of pipes, where it will give away its thermal energy in order to evaporate the liquid ammonia present on the fabric, and subsequently it will be cooled by the low temperature of the latter. In a variation not illustrated here, before being passed into cylinders 6,5,4,3, the ammonia solution will transfer a part of its thermal energy, via a thermal exchanger, to the NH₄OH solution incoming into C.

In another variation not illustrated here, the NH₄OH solution depleted in NH3, yet rich in thermal energy, can be passed, via line 30, to other parts of machine A that perform other functions, such as, for instance, final washing, where it will give away its thermal energy. The cooled NH₄OH solution will then be passed, via 32, into scrubber B, to be enriched again with NH₃.

Alternatively, the solution depleted in NH₃ can be passed, via line 30, into small tubs 7 placed underneath; the thermal energy present in the solution will cause the liquid ammonia present on the fabric to evaporate; part of the water contained in the solution will be absorbed by the fabric, while the remaining part, once cooled, will be directed back, via line 32, into scrubber B, to be enriched again with NH₃.

In order to keep constant the volume of the solution inside the hydraulic circuit, a mass of water equal to the mass incoming into, fed by inlet 10, will be discharged through 34; the NH3 fumes generated after chemical flashing will be absorbed by scrubber B, while the hot water will be discharged by 35.

If, during operation, a high mass of NH40H depleted in NH3 should be discharged, after cooling, from the hydraulic circuit (to be used for other fabric finishing treatments), an equal mass of makeup NH40H +makeup cold water will be added through inlet 10 and through inlet 37.

If, during operation, a high mass of NH40H depleted in NH3 should be discharged, through 34, the NH3 fumes generated after chemical flashing will be absorbed by scrubber B, while the hot water will be discharged by 35. An equal mass of makeup NH40H + makeup cold water will be added through inlet 10 and through inlet 37.

Going back to our the plant, the ammonia liquefaction temperature will depend on the operating pressures; for instance, at atmospheric pressure, the liquefaction temperature will be approx. - 33° C, while at 5 atmosphere pressure it will be approx. + 4.7° C, at 10 atmospheres it will be approx. + 25.7° C, at 15 atmospheres it will be approx. +40° C, while at 20 atmospheres it will be approx. + 50°C.

Consequently, depending on the operating pressure, the cooling fluid entering D will have to be cooled by a "chiller", in case of treatment at atmospheric pressure or in case of reduced pressure, while it can be advantageously and economically cooled by cold water or air, in case of high pressure.

In case of liquefaction of ammonia under high pressure conditions and of its use in machine A, at atmospheric pressure, the ammonia will be caused to expand inside separator 26, so that it will cool down and liberate a portion of gaseous ammonia, which will be collected by line 29 and will be passed into "scrubber" B, while the liquid fraction will be collected by line 27 and passed into tank 28.

In the plant referred to in this invention, in its different embodiments, the reflux of previously condensed liquid ammonia does not take place, the temperature of the solution is never taken to the boiling point and a high amount of thermal energy is recovered; the total thermal energy is approx. 1/3 the energy of a standard distillation column.

Moreover, the reduced amount of ammonia solution present in the plant can speed up the temperature increase and put the system into operation in a comparatively short time.

Additionally, the plant referred to in this invention is comparatively simple, from the viewpoint of construction as well as operation, unlike similar plants of known type; this makes its management easier and reduces maintenance requirements to a minimum.

It should also be considered that an amount of liquid ammonia is still used up in the textile treatment process, wherefore makeup liquid ammonia has to be added on a comparatively regular basis.

In plants of known type, the makeup liquid ammonia is supplied by big external tanks that contain liquid ammonia specifically bought for this purpose; this means that all of these plants are required to have permits for the storage of large volumes of liquid ammonia.

Conversely, in the plant referred to in this invention the makeup liquid ammonia is obtained from an ammonium hydroxide solution (10), which can be easily purchased on the market, for which a storage permit is not required. In the plant referred to in this invention, the amount of liquid ammonia in the plant, which is necessary to treat the textile product, can be easily kept below the limit beyond which special permits are required.

Among the advantages of this invention, is the fact that in the finishing treatment of textile products by means of liquid ammonia, the batches to be treated may be small or large; quite often, these batches are comparatively small and, consequently, continuous treatment of batches of the same type for 24 hours a day can be a problem. Therefore, it is important to have available a plant that potentially can be started in "very short" times. The distillation tower used in similar plants of known type requires several hours to be started. Therefore, the fact of having available a plant that only takes a few minutes to start is a remarkable advantage.

It should finally be pointed out that the various embodiments of the system for recovery and liquefaction of gaseous ammonia from an aqueous ammonia solution, from an aqueous ammonia solution containing a reduced percentage of caustic soda, as well as from an aqueous ammonia solution containing fabric finishing products, or from an aqueous ammonia solution containing textile dyestuffs, have been described purely by way of non-limiting example. In practice, other constructional solutions may be adopted, both in terms of scrubber, evaporator, number of evaporators and condenser, as well as in terms of the ammonia liquefier; it will also be possible to envisage variations in terms of the insertion of condensation/evaporation plates or filling bodies, as well as in terms of the various heating and cooling systems.

List of the references used in the drawings.
A) Machine for the treatment of fabrics with liquid ammonia or with liquid ammonia solution.
B) Scrubber assembly
C) Evaporator assembly
D) Ammonia liquefier assembly
   1. Zone for impregnation/reaction of the fabric with liquid ammonia.
   2. Zone for evaporation of ammonia from the treated fabric.
   3. Heating cylinder.
   4. Heating cylinder.
   5. Heating cylinder.
   6. Heating cylinder.
   7. Tub for impregnating with water the fabric soaked in liquid ammonia.
   8. NH₃ fumes feed line to scrubber assembly.
   9. Pump with adjustable discharge head and flow rate.
   10. Ammonium hydroxide makeup inlet (consumption).
   11. Feed line for cooled concentrated ammonium hydroxide solution.
   12. Condenser.
   13. Feed line for concentrated ammonium hydroxide solution.
   14. Heating/cooling fluid inlet.
   15. Heating/cooling fluid outlet.
   16. Heating/cooling fluid inlet.
   17. Heating/cooling fluid outlet.
   18. Heating fluid inlet.
   19. Heating fluid outlet.
   20. Feed line for NH₃ gasses mixed with a reduced percentage of aqueous vapours.
   21. Condensate feed line.
   22. NH₃ gasses feed line,
   23. Cooling liquid inlet.
   24. Cooling liquid outlet.
   25. Pressure reducing valve.
   26. Ammonia separator into liquid and gaseous phase.
   27. Liquid ammonia feed line on the process machine.
   28. Liquid ammonia storage tank on the process machine.
   29. Ammonia gas feed line to scrubber.
   30. Feed line for low-concentration hot ammonium hydroxide solution.
   31. Pressure reducing valve.
   32. Feed line for low-concentration cooled ammonium hydroxide solution.
   33. Pressure reducing valve.
   34. Separator employed to separate the liquid fraction of the ammonium hydroxide solution from the gas fraction.
   35. Hot water discharge line.
   36. Feed line for ammonia gasses and aqueous gasses.
   37. Makeup water feed line.

## Claims

1. PROCESS for recovering liquid ammonia from a textile fabric treated with liquid ammonia, or with liquid ammonia solutions, the said process being **characterised in that** it envisages the following steps:
a) evaporation or washing of ammonia from the textile fabric, inside a process machine (A);
b) fixing and concentration of ammonia, in the form of ammonium hydroxide, inside a scrubber (B);
c) partial evaporation, by heating, of an adjustable percentage of ammonia, from the concentrated solution of ammonium hydroxide, inside an evaporator (C);
d) complete transformation of the evaporated ammonia to liquid form, inside a liquefier (D), prior to its reuse in machine (A);
e) cooling of the ammonium hydroxide solution depleted in ammonia, which is then sent back into scrubber (B), to be enriched again with ammonia.

2. PROCESS, according to claim 1, **characterised in that** it envisages the following steps:
a) evaporation or washing of ammonia from the textile fabric, inside a process machine (A);
b) fixing and concentration of ammonia, in the form of ammonium hydroxide, inside a scrubber (B);
c) partial evaporation, by heating, of an adjustable percentage of ammonia, from the concentrated solution of ammonium hydroxide, inside an evaporator (C );
d) complete transformation of the evaporated ammonia to liquid form, inside a liquefier (D) prior to its reuse in machine (A);
e) discharge of the hot ammonium hydroxide solution depleted in ammonia, which is flashed and, then, the generated ammonia fumes are sent back into scrubber (B).

3. PROCESS, according to claim 1 and 2, **characterised in that** inside scrubber (B), the percentage of ammonia present in the ammonium hydroxide solution is adjustable.

4. PROCESS, according to claim 1 and 2, **characterised in that** inside evaporator (C), the ammonia evaporation temperature is adjustable.

5. PROCESS, according to claim 1 and 2, **characterised in that** the percentage of ammonia present in the ammonia solution leaving evaporator C can be adjusted from a maximum of 50% down to a minimum of 1% of the total solution; preferably it can be adjusted from a maximum of 25% down to a minimum 1% of the total solution, but still more preferably it can be adjusted from a maximum of 10% down to a minimum of 1% of the total solution.

6. PROCESS, according to claim 1 and 2, **characterised in that** cooling of the ammonium hydroxide solution depleted in ammonia takes place by passing the liquid through cylinders (6, 5, 4, 3) and/or through tubs (7).

7. PROCESS, according to claim 1 and 2, **characterised in that** the operating pressure inside the ammonia recovery circuit can be adjusted and can be set at atmospheric pressure value, or at a pressure higher than atmospheric pressure.
